# EUROPÄISCHE PATENTSCHRIFT

(11) **EP 1 897 785 B1**
(45) Veröffentlichungstag und Bekanntmachung des Hinweises auf die Patenterteilung: **31.10.2012**
(21) Anmeldenummer: 07015859.7
(22) Anmeldetag: 11.08.2007
(51) Int. Cl.: B62D 15/02

(54) **Fahrerassistenzsystem, Lenksystem und Verfahren zum Unterstützen des Fahrers eines Fahrzeugs**
Driver support system, steering system and method for supporting the driver of a vehicle
Système d'assistance à la conduite, système de direction et procédé destiné à l'assistance du conducteur d'un véhicule

(30) Priorität: 11.09.2006 DE 102006043122; 05.04.2007 DE 102007016799
(43) Veröffentlichungstag der Anmeldung: 12.03.2008
(73) Patentinhaber: Deutsches Zentrum für Luft- und Raumfahrt e.V., 51147 Köln (DE); Technische Universität Braunschweig Carolo-Wilhelmina, 38106 Braunschweig (DE)
(72) Erfinder: Ehrenpfordt, Ingmar, Dipl.-Ing. (DLR), 38118 Braunschweig (DE); Eggert, Frank, Prof.-Dr. (TU), 38106 Braunschweig (DE)
(74) Vertreter: Jepsen, Ralph

(56) Entgegenhaltungen:
- WO-A1-2005/047045
- DE-A1-102004 024 692
- DE-A1-102005 004 727

## Beschreibung

Die Erfindung betrifft ein Fahrerassistenzsystem für ein Fahrzeug mit einer Kopplung zwischen einem Lenkrad und wenigstens einem gelenkten Fahrzeugrad, durch die eine an dem Lenkrad aufgebrachte Drehbewegung in eine Lenkwinkeländerung des wenigstens einen Fahrzeugrades umgesetzt wird, mit einer Umfeldsensorik zum Ermitteln von Objekten im Umfeld des Fahrzeugs und mit einer Steuereinheit, die eingerichtet ist, in Abhängigkeit von Ausgangssignalen der Umfeldsensorik an dem Lenkrad eine Drehbewegung aufzubringen und das Lenkrad in seine Winkelstellung vor der Drehbewegung zurückzustellen.

Die Erfindung betrifft ferner eine Lenkung für ein Fahrzeug mit einem Lenkrad und wenigstens einem gelenkten Fahrzeugrad, einem Lenkradwinkelsensor zum Bestimmen einer Winkelstellung des Lenkrades und einem Lenkradantrieb zum Aufbringen einer Drehbewegung an dem Lenkrad.

Die Erfindung betrifft ferner ein Verfahren zum Unterstützen des Fahrers eines Fahrzeugs.

Die Fahrerassistenzsysteme sollen das Fahrzeug in die Lage versetzen, seine Umgebung wahrzunehmen und zu interpretieren, gefährliche Situationen zu erkennen und den Fahrer bei seinen Fahrmanövern zu unterstützen. Ziel dabei ist es, Unfälle im besten Fall ganz zu vermeiden.

Hierzu wird die Fahrzeugumgebung mit geeigneten Sensoren ertastet. Aus den Ausgangssignalen der Sensoren ermittelt das Fahrerassistenzsystem Objekte und leitet gegebenenfalls Warnungen ab oder führt unmittelbar notwendige Fahrmanöver aus. Bei den für die Fahrzeugsicherheit relevanten Objekten kann es sich zum einen um körperliche Gegenstände wie andere Fahrzeuge, Gegenstände auf der Fahrbahn oder andere Verkehrsteilnehmer handeln; zum anderen kann darunter auch ein nicht körperlicher Gegenstand, wie zum Beispiel die Fahrspur, zu verstehen sein, die ebenfalls für die Sicherheit des Fahrzeugs wichtig ist.

Ein bekanntes Fahrerassistenzsystem ist ein so genannter Spurhalteassistent. Spurhalteassistenten warnen den Fahrer eines Fahrzeugs vor dem unbewussten Verlassen der Fahrspur, damit er sein Fahrzeug durch aktiven Lenkeingriff wieder in die Fahrspur zurückführen kann. Bekannte Spurhalteassistenten warnen den Fahrer üblicherweise über eine haptische Wahrnehmung. Beispielsweise wird der Fahrer durch ein Rütteln im Sitz des Fahrers darauf aufmerksam gemacht, dass er dabei ist, mit seinem Fahrzeug die Fahrspur zu verlassen. Das Rütteln erfolgt auf derjenigen Seite des Sitzes, zu der das Fahrzeug die Fahrspur zu verlassen droht. Bei einem anderen System erfolgt die Warnung durch ein Vibrieren des Lenkrades.

Bei den bekannten Spurhalteassistenten müssen die auf den Fahrer wirkenden haptischen Reize zunächst bewusst wahrgenommen, verarbeitet und interpretiert werden. Die Bedeutung dieser haptischen Reize und die erforderliche Reaktion müssen vom Fahrer zunächst erlernt werden. Damit benötigen diese Spurhalteassistenten zunächst eine gewisse Lernphase des Fahrers, bevor die richtige Reaktion auf die haptischen Reize erfolgen kann. Zudem vergeht auch nach der Lernphase eine gewisse Zeit zwischen der Warnung und der Reaktion des Fahrers, wodurch sich die Gefahr erhöht, dass ein gezielter Lenkeingriff zu spät erfolgt.

Es ist daher Aufgabe der vorliegenden Erfindung, ein verbessertes Fahrerassistenzsystem bereitzustellen, das eine schnelle Reaktion auf eine Gefahrenlage im Umfeld des Fahrzeugs ermöglicht. Ferner ist es Aufgabe der vorliegenden Erfindung, ein verbessertes Lenksystem sowie ein verbessertes Verfahren zum Unterstützen des Fahrers eines Fahrzeuges bereitzustellen.

Aus der DE 10 2010 024 692 A1 ist ein Verfahren und eine Vorrichtung zur Unterstützung des Fahrers eines Fahrzeuges bekannt. Dabei wird mit Hilfe von entsprechender Sensorik der Fahrspurverlauf erfasst und mit der Fahrspur verglichen, so dass bei einer Erkennung eines bevorstehenden Verlassens der Fahrspur ein Lenkraddrehrnoment an dem Lenkrad erzeugt wird, um dem Verlassen der Fahrspur entgegenzuwirken.

Aus der DE 10 2005 004 727 A1 ist des Weiteren ein Verfahren zur Durchführung eines selbsttätigen Lenkeingriffs zur Spurhaltung bekannt. Dazu wird aufgrund der aktuellen Abweichung zwischen Fahrrichtung und Fahrspur ein entsprechender Lenkeingriff durchgeführt, um diese Abweichung zu verringern.

Schließlich ist aus der WO 20051047045 A1 ein Verfahren zur Konditionsüberwachung eines Fahrzeugführers bekannt, bei dem der Verlauf des Fahrzeuges mit der Fahrspur kontinuierlich verglichen wird. Wird nun festgestellt, dass über einen längeren Zeitraum der Fahrer exakt der Fahrspur folgt, so wird davon ausgegangen, dass während dieser Zeit das Lenksystem zur Spurhaltung aktiv ist.

Diese Aufgabe wird gemäß der Erfindung durch ein gattungsgemäßes Fahrerassistenzsystem dadurch gelöst, dass die Steuereinheit eingerichtet ist, die Kopplung zwischen dem Lenkrad und dem wenigstens einen Fahrzeugrad aufzuheben, bevor die Drehbewegung an dem Lenkrad aufgebracht wird, und dass die Steuereinheit eingerichtet ist, die Kopplung zwischen dem Lenkrad und dem wenigstens einen Fahrzeugrad wiederherzustellen, nachdem das Lenkrad in seine Winkelstellung vor der Drehbewegung zurückgestellt worden ist

Die Warnung des Fahrers erfolgt bei dem erfindungsgemäßen Fahrerassistenzsystem durch eine Drehbewegung mit unmittelbar folgender Rückstellung des Lenkrades, also ruckartig. Der Ruck erfolgt dabei so schnell und intensiv, dass beim Fahrer eine reflexartige Handlung ausgelöst wird. Dieser natürliche Reflex führt automatisch zu der gewünschten Reaktion des Gegenlenkens (also des Lenkens in eine Richtung, die der Richtung der aufgebrachten Drehbewegung entgegengesetzt ist), ohne dass der Fahrer die Warnung zunächst direkt wahrnehmen und interpretieren müsste. Hierdurch wird die Zeitspanne zwischen Reizaufnahme, Reizverarbeitung, Reaktionsvorbereitung und Reaktionsausführung wesentlich verkürzt und ein rechtzeitiges Gegenlenken auch bei einer erforderlichen schnellen Reaktion, beispielsweise bei plötzlich auftretenden Hindernissen und/oder bei hohen Geschwindigkeiten, in Kurven oder bei starken Lenkbewegungen, ermöglicht. Dadurch können folgenschwere Verkehrsunfälle vermieden werden. Damit trägt das erfindungsgemäße Fahrerassistenzsystem zu einer Erhöhung der Verkehrssicherheit bei.

Um zu vermeiden, dass die von der Steuereinheit an dem Lenkrad aufgebrachte Drehbewegung auf die Fahrzeugräder umgesetzt wird und damit eine unerwünschte, vom Fahrer unabhängige Lenkbewegung erzeugt wird, ist die Steuereinheit eingerichtet, die Kopplung zwischen dem Lenkrad und dem wenigstens einen Fahrzeugrad aufzuheben, bevor die Drehbewegung an dem Lenkrad aufgebracht wird. Zweckmäßig ist es hierbei, wenn das Steuergerät eingerichtet ist, die Kopplung zwischen dem Lenkrad und dem wenigstens einen Fahrzeugrad wieder herzustellen, nachdem das Lenkrad in seine Winkelstellung vor der Drehbewegung zurückgestellt worden ist.

Ein gezielter Ruck am Lenkrad ist erfindungsgemäß dadurch erreichbar, dass die durch die Steuereinheit an dem Lenkrad aufgebrachte Drehbewegung impulsförmig erfolgt.

Bei dem erfindungsgemäßen Fahrerassistenzsystem erfolgt das erforderliche Fahrtmanöver durch einen aktiven Lenkeingriff des Fahrers. Um zu gewährleisten, dass der gesamte Lenkeingriff des Fahrers in das Fahrmanöver (beispielsweise das Zurückführen des Fahrzeugs in die Fahrspur oder das Ausweichen eines Hindernisses) umgesetzt wird, ist erfindungsgemäß vorgesehen, dass die Entkopplung, das Aufbringen der Drehbewegung an dem Lenkrad, die Rückstellung der Winkelstellung des Lenkrades und die Wiederherstellung der Kopplung an die Auslösezeit für reflexbedingte Handlungen von Menschen angepasst ist.

Ein besonders wirkungsvoller aktiver Lenkeingriff des Fahrers ist dadurch erreichbar, dass die Größe der an dem Lenkrad aufgebrachten Drehbewegung abhängig ist von der Größe einer Lenkradbewegung, die erforderlich ist, um einer durch die Umfeldsensorik detektierten Gefährdung entgegen zu wirken. Hierbei wird ausgenutzt, dass die Stärke einer Reflexhandlung eines Menschen von der Stärke des diese Reflexhandlung auslösenden Reizes abhängig ist.

Das erfindungsgemäße Fahrerassistenzsystem lässt sich bei einer Steer-by-wire-Lenkung besonders einfach einsetzen, wenn die Kopplung eine elektronische Kopplung ist. Bei einer Steer-by-wire-Lenkung wird eine Drehbewegung des Lenkrades in ein elektrisches Signal umgewandelt und mit diesem ein Antrieb, beispielsweise ein Servomotor oder Stellmotor, angesteuert, der eine Lenkwinkeländerung des Fahrzeugrades bzw. der Fahrzeugräder bewirkt.

Ist das Fahrzeug mit einer mechanischen Lenkung ausgestattet, bei der eine Drehbewegung des Lenkrades mechanisch in eine Lenkwinkeländerung des Fahrzeugrades bzw. der Fahrzeugräder umgesetzt wird, kann die für das erfindungsgemäße Fahrerassistenzsystem erforderliche Kopplung besonders einfach durch eine mechanische Kopplung realisiert werden. Beispielsweise kann die mechanische Kopplung auf Reibschluss oder Formschluss beruhen. Vorzugsweise wird die mechanische Kopplung elektronisch gesteuert, das heißt, die Kopplung bzw. Entkopplung wird durch ein elektronisches Signal ausgelöst.

Das erfindungsgemäße Fahrerassistenzsystem lässt sich für unterschiedliche Gefahrsituationen ausbilden, bei denen zur Vermeidung von Unfällen eine Korrektur der Fahrspur erforderlich ist. Zu denken ist beispielsweise an einen Fahrspurassistenten, der erkennt, wenn das Fahrzeug unbeabsichtigt die Fahrspur verlässt bzw. zu verlassen droht. In diesem Fall ist die Umfeldsensorik als Spurerkennungseinrichtung ausgebildet, die ein unbeabsichtigten Verlassens der Fahrspur detektiert. Die Steuereinheit ist in diesem Fall eingerichtet, an dem Lenkrad eine Drehbewegung in Richtung der Spurabweichung aufzubringen und das Lenkrad in seine Winkelstellung vor der Drehbewegung zurückzustellen, wenn die Spurerkennungseinrichtung ein unbeabsichtigtes Verlassen der Fahrspur detektiert.

In einer weiteren Ausführungsform ist das Fahrerassistenzsystem als Überholassistent ausgebildet, der vor Gefahren bei Überholmanövern warnt. Denkbar ist auch ein Ein- und Ausfädelassistent, der insbesondere vor Kollisionen mit anderen Fahrzeugen warnt, oder ein Ausweichassistent, der auch vor Hindernissen auf der Fahrbahn warnen kann. Ein Umfahrassistent warnt beispielsweise vor Gefahren beim Umfahren anderer Fahrzeuge oder von Gegenständen. Das Fahrerassistenzsystem kann auch mehrere dieser Aspekte umfassen. Die Umfeldsensorik ist an den jeweils erforderlichen Zweck des Fahrerassistenzsystems anzupassen, beispielsweise durch unterschiedliche Sensoren, Sensoranordnungen oder Auswerteeinrichtungen für die Auswertung der Sensorsignale.

Die Aufgabe wird gemäß der Erfindung ferner durch eine gattungsgemäße Lenkung gelöst, die gekennzeichnet ist durch ein erfindungsgemäßes Fahrerassistenzsystem.

Die erfindungsgemäße Lenkung trägt aufgrund des erfindungsgemäßen Fahrerassistenzsystems zu einer Erhöhung der Sicherheit des Straßenverkehrs bei.

In einer Ausführungsform ist die Lenkung gekennzeichnet durch wenigstens einen Fahreigenschaftssensor. Durch den wenigstens einen Fahreigenschaftssensor können Fahreigenschaften von den Fahrzeugrädern über die Lenkradsteuerung an das Lenkrad und somit an den Fahrer weitergegeben werden. Der Fahrer erhält dadurch ein Lenkgefühl für das Fahrzeug, das den tatsächlichen Fahreigenschaften des Fahrzeugs entspricht und kann sein Fahrverhalten an die tatsächlichen Fahreigenschaften des Fahrzeugs anpassen. Zweckmäßig sind Fahreigenschaftssensoren zum Bestimmen der Fahrzeuggeschwindigkeit, der Laufradwinkelstellung, der Fahrzeugradneigung und der Haftung des Fahrzeugrades bzw. der Fahrzeugräder auf der befahrenen Oberfläche.

Die Aufgabe wird gemäß der Erfindung ferner gelöst durch ein Verfahren zum Unterstützen des Fahrers eines Fahrzeugs mit folgenden Schritten:
a) Ermitteln eines Objektes im Umfeld des Fahrzeugs, das eine Gefährdung für das Fahrzeug darstellt;
b) Aufbringen einer Drehbewegung an dem Lenkrad, wobei die Drehbewegung in diejenige Richtung erfolgt, die der Richtung eines Ausweichmanövers entgegengesetzt ist;
c) Rückstellen des Lenkrads in seine Winkelstellung vor der aufgebrachten Drehbewegung,
wobei das Lenkrad vor dem Aufbringen der Drehbewegung an dem Lenkrad von dem wenigstens einen gelenkten Fahrzeugrad entkoppelt wird, und dass das Lenkrad nach dem Rückstellen des Lenkrads mit dem wenigstens einen gelenkten Fahrzeugrad wieder gekoppelt wird.

Das erfindungsgemäße Verfahren nutzt wie das erfindungsgemäße Fahrerassistenzsystem und die erfindungsgemäße Lenkung eine reflexbedingte Handlung des Fahrers aufgrund eines gezielten Rucks am Lenkrad aus. Die Reizaufnahme, Reizverarbeitung, Reaktionsvorbereitung und Reaktionsausführung erfolgen in einer wesentlich kürzeren Zeitspanne als bei herkömmlichen Verfahren, die auf einen aktiven Lenkeingriff des Fahrers zielen. Grund hierfür ist, dass ein Erlernen und bewusstes Verarbeiten der Bedeutung des Warnsignals entfällt. Damit trägt auch das erfindungsgemäße Verfahren zur Erhöhung der Sicherheit des Straßenverkehrs bei.

Erfindungsgemäß ist vorgesehen, dass das Lenkrad vor dem Aufbringen der Drehbewegung an dem Lenkrad von dem wenigstens einen gelenkten Fahrzeugrad entkoppelt wird, und dass das Lenkrad nach dem Rückstellen des Lenkrads mit dem wenigstens einen gelenkten Fahrzeugrad wieder gekoppelt wird. Hierdurch ist es möglich, eine Lenkwirkung des Fahrzeugrades durch die Drehbewegung auszuschließen. Dies kann bei größeren Drehbewegungen vorteilhaft sein.

Besonders einfache und kurze ruckartige Bewegungen am Lenkrad lassen sich realisieren, wenn die Drehbewegung an dem Lenkrad impulsförmig aufgebracht wird.

In einer Ausführungsform ist vorgesehen, dass das Aufbringen der Drehbewegung an dem Lenkrad und das Rückstellen der Winkelstellung des Lenkrades an die Auslösezeit für reflexbedingte Handlungen von Menschen angepasst sind. In einer weiteren Ausführungsform ist vorgesehen, dass das Entkoppeln, Aufbringen der Drehbewegung an dem Lenkrad, Rückstellen der Winkelstellung des Lenkrades und Wiederherstellen der Kopplung an die Auslösezeit für reflexbedingte Handlungen von Menschen angepasst sind. Diese Ausführungsformen gewährleisten ein sicheres Fahrmanöver auch bei höheren Geschwindigkeiten oder größeren Lenkeingriffen.

Ein besonders wirkungsvoller aktiver Lenkeingriff des Fahrers ist dadurch erreichbar, dass die Größe der an dem Lenkrad aufgebrachten Drehbewegung in Abhängigkeit von der Größe des erforderlichen Ausweichmanövers erfolgt.

In einer besonderen Ausführungsform ist das erfindungsgemäße Verfahren zum Unterstützen des Fahrers als Verfahren zur Spurhaltung eines Fahrzeugs realisiert. Dabei wird die Drehbewegung an dem Lenkrad aufgebracht, wenn ein unbeabsichtigtes Verlassen der Fahrspur detektiert wird. In diesem Fall stellt die Fahrspur das Objekt im Umfeld des Fahrzeugs und das (drohende) Verlassen der Fahrspur die Gefährdung für das Fahrzeug dar.

Lernprozesse, wie Habituation, sind aufgrund der regelmäßig eher seltenen Auslösung des Systems nicht zu erwarten. Eine eventuell auftretende Sensibilisierung des reflektorischen Verhaltens kann durch entsprechende Abstufung des auslösenden Signals kompensiert werden.

Zweckmäßig löst das Fahrerassistenzsystem, die Lenkung oder das Verfahren gemäß der Erfindung dann keine reflexartige Handlung des Fahrers aus, wenn dieser durch eine geeignete Maßnahme anzeigt, dass er ein Verhalten bewusst vornimmt. Beispielsweise greift das als Spurhalteassistent realisierte Fahrerassistenzsystem dann nicht ein, wenn der Fahrer einen Richtungsanzeiger setzt und damit anzeigt, dass das Verlassen der Fahrspur bewusst vorgenommen wird. Das Fahrerassistenzsystem greift jedoch dann ein, wenn es ein Hindernis, zum Beispiel ein Fahrzeug im toten Winkel erkennt, da hier eine zusätzliche Gefährdung auftritt. Zweckmäßig wird auch dann keine reflexartige Handlung des Fahrers ausgelöst, wenn das Fahrerassistenzsystem die Spur des Fahrzeugs nicht eindeutig erkennen kann oder gefährdende Objekte (beispielsweise Hindernisse) erkannt werden.

Die Erfindung wird anhand der in den folgenden Zeichnungen dargestellten Ausführungsbeispiele näher erläutert. Es zeigen:
- Figur 1: ein Flussdiagramm des erfindungsgemäßen Verfahrens,
- Figur 2: eine schematische Darstellung eines erfindungsgemäßen Fahrerassistenzsystems,
- Figur 3: eine schematische Darstellung einer spurhaltungsgeregelten Lenkung gemäß der Erfindung.

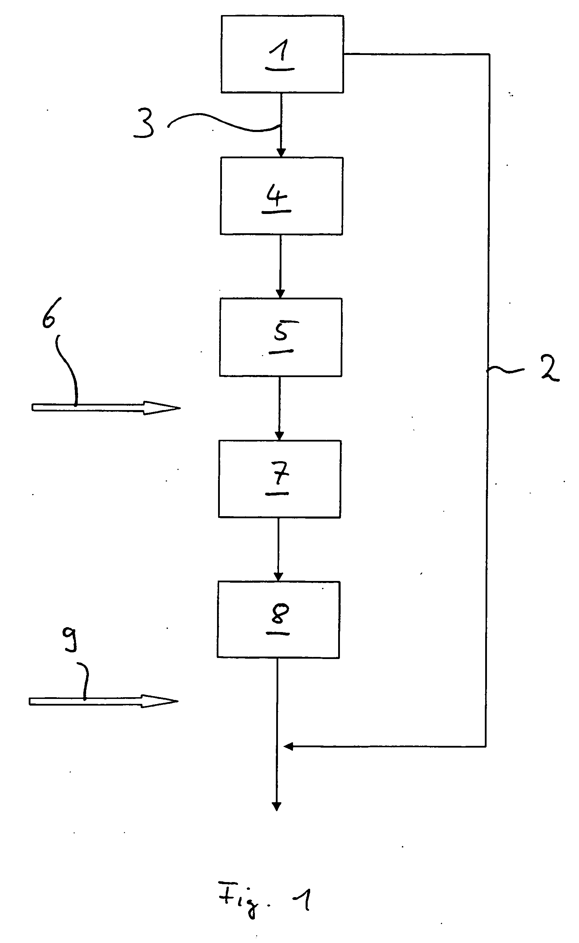

In Figur 1 wird im Verfahrensschritt 1 mittels einer geeigneten Umfeldsensorik die Fahrzeugumgebung nach möglichen Objekten abgesucht, die eine Gefährdung für das Fahrzeug darstellen können. Solche Objekte können andere Fahrzeuge oder Gegenstände sein. In Betracht kommt aber auch eine korrekte Fahrzeugspur, die zu verlassen werden droht.

Die Umfeldsensorik ist für diese Aufgabe mit geeigneten Sensoren und einer geeigneten Auswerteeinrichtung versehen. Für den Fernbereich kommen beispielsweise Radarsensoren oder Videosensoren in Betracht. Ein geeigneter Fernbereichsradarsensor arbeitet vorzugsweise bei einer Arbeitsfrequenz von 76,5 bis 77 GHz. Ist die Umfeldsensorik mit Videosensoren ausgestattet, besteht eine geeignete Auswerteeinrichtung aus einer Bildverarbeitungseinrichtung.

Die Auswerteeinrichtung kann eingerichtet sein, den Abstand zu den erkannten Objekten oder die relativen Geschwindigkeiten von den Objekten zu bestimmen. Zudem ist es möglich, dass die Auswerteeinrichtung die Objekte klassifiziert. Des Weiteren ist die Umfeldsensorik eingerichtet, entweder die Fahrtrajektorie des Fahrzeugs oder geplante Fahrtrajektorie zu erkennen oder deren Daten zu empfangen.

Stellt die Umfeldsensorik fest, dass auf der aktuellen Fahrtrajektorie oder der geplanten Fahrtrajektorie keine gefährdenden Objekte vorhanden sind, die eine Kollision oder einen Unfall zur Folge haben können, werden keine Maßnahmen für eine Kurskorrektur eingeleitet 2.

Wird eine Gefährdung für das Fahrzeug festgestellt 3, die eine Kurskorrektur erforderlich macht, wie beispielsweise eine unbewusste Spurabweichung des Fahrzeugs oder ein anderes Fahrzeug auf Kollisionskurs, werden im Verfahrensschritt 4 die Drehbewegungen des Lenkrades von den Lenkwinkeländerungen der Fahrzeugräder entkoppelt.

Im Verfahrensschritt 5 erfolgt eine ruckartige Drehbewegung des Lenkrades in diejenige Richtung, die einer gebotenen Kurskorrektur entgegengesetzt ist, und in Abhängigkeit von der Größe der erforderlichen Kurskorrektur. Diese Richtung wird von einer geeigneten Steuereinrichtung bestimmt. Dies sei am Beispiel eines als Überholassistenten ausgebildeten Fahrzeugassistenten kurz erläutert: Hat der Fahrer die Absicht, seine Fahrzeugspur zu verlassen und setzt dafür den entsprechenden Richtungsanzeiger, entfällt im Normalfall dieser Art eine Warnung, da zunächst von einem gewollten Spurwechsel ausgegangen werden kann. Detektiert die Umfeldsensorik des Fahrzeugs jedoch ein Hindernis (beispielsweise ein anderes Fahrzeug im toten Winkel) im vom Fahrer angestrebten Fahrbereich, erfolgt die ruckartige Drehbewegung des Lenkrades in Richtung der geplanten Fahrtrajektorie, das heißt, zu dem Fahrzeug im toten Winkel hin.

Aufgrund der ruckartigen Drehbewegung des Lenkrads wird beim Fahrer des Fahrzeugs ein neuroreflektorischer Reiz ausgelöst 6. Unmittelbar nach der ruckartigen Drehbewegung wird im Verfahrensschritt 7 das Lenkrad in diejenige Winkelstellung zurückgestellt, in der es sich vor der ruckartigen Drehbewegung befand. Aufgrund der Entkopplung der Drehbewegungen des Lenkrades für Lenkwinkeländerungen der Fahrzeugräder erfolgt die gesamte ruckartige Drehbewegung des Lenkrades, also die Änderung der Winkelstellung des Lenkrades, sowie die Rückstellung des Lenkrades in die Winkelstellung vor der Entkopplung ohne Auswirkungen auf die Fahrzeugradstellung. Im Verfahrensschritt 8 wird die Kopplung zwischen den Drehbewegungen des Lenkrades und den Lenkwinkeländerungen der Fahrzeugräder wieder hergestellt, so dass eine Drehbewegung des Lenkrades eine entsprechende Lenkwinkeländerung der Fahrzeugräder auslöst. Die Zeitspanne zwischen Entkopplung und Kopplung ist so dimensioniert, dass die Reaktion des Fahrers 9 nach der Wiederherstellung der Kopplung erfolgt.

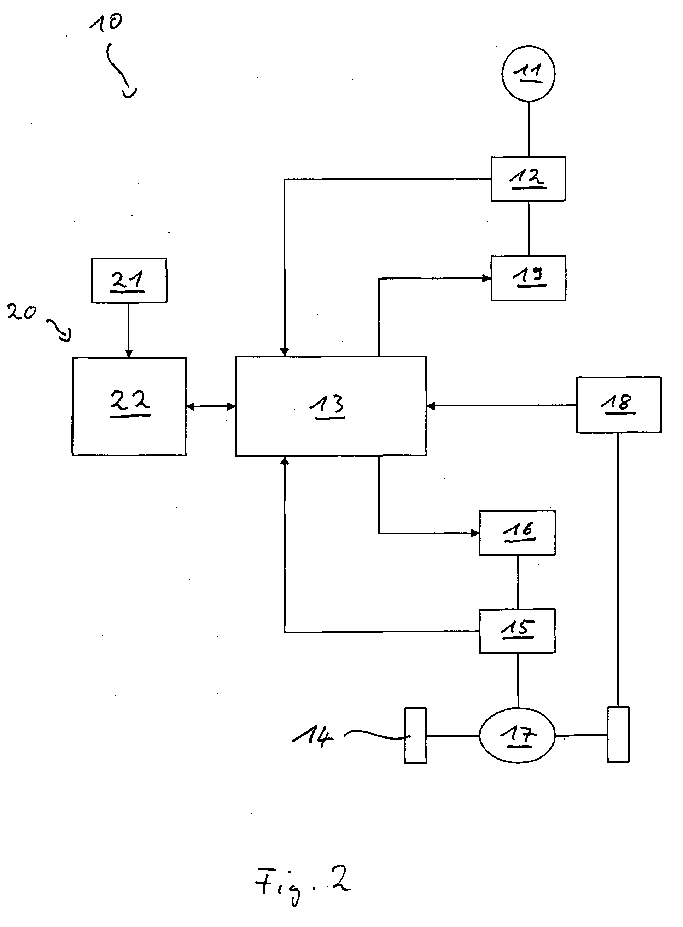

In Figur 2 ist eine erfindungsgemäße Lenkung 10 für ein Fahrzeug dargestellt.

Die Lenkung weist ein Lenkrad 11 auf, dessen Winkelstellung bezogen auf eine Ausgangsstellung, beispielsweise die Fahrzeuglängsachse, mittels eines Lenkradwinkelsensors 12 gemessen wird. Die gemessene Winkelstellung des Lenkrads 11 wird an eine Steuereinheit 13 weitergeleitet.

Die Winkelstellung des Lenkrades 11 stellt bei normaler Fahrt (das heißt, beispielsweise durch unbewusste Spurabweichung) einen Sollwert für eine Regelung der Lenkwinkel für Fahrzeugräder 14 dar. Für diese Regelung wird der Lenkwinkel der Fahrzeugräder 14 mittels eines Fahrzeugradwinkelsensor 15 bestimmt. Dieser Lenkwinkel wird als Ist-Wert für die Regelung an die Steuereinheit 13 weitergegeben. Die Steuereinheit 13 vergleicht den Ist-Wert von dem Fahrzeugradwinkelsensor 15 mit dem Soll-Wert von dem Lenkradwinkelsensor 12. In Abhängigkeit von der Differenz zwischen Soll-Wert und Ist-Wert wird von der Steuereinheit ein Fahrzeugradantrieb 16 angesteuert. Der Fahrzeugradantrieb 16 kann beispielsweise durch den Stell- oder Servomotor einer üblichen Servolenkung realisiert sein. Über ein Lenkgetriebe 17 werden die Fahrzeugräder 14 in ihrem Lenkwinkel verändert.

Die Lenkung 10 weist zusätzlich Fahreigenschaftssensoren 18 auf, die die Fahrzeuggeschwindigkeit des Fahrzeugs und die Neigung der Fahrzeugräder quer zur Fahrtrichtung bestimmen. Die gemessenen Fahreigenschaften werden an die Steuereinheit 13 weitergeleitet. In Abhängigkeit der gemessenen Fahreigenschaften steuert die Steuereinheit 13 einen Lenkradantrieb 19 an, der ein geeignetes Drehmoment auf das Lenkrad 11 ausübt. Auf diese Weise ist es möglich, dem Fahrer des Fahrzeugs ein Lenkgefühl zu geben, das den wirklichen Fahreigenschaften entspricht.

Die Lenkung 10 weist weiter eine Umfeldsensorik 20 auf. Die Umfeldsensorik umfasst Sensoren 21 und eine Auswerteeinrichtung 22.

Unter den Sensoren 22 befinden sich sowohl Nahbereichssensoren als auch Fernbereichssensoren. Die Nahbereichssensoren sind in Ultraschalltechnik realisiert. Sie besitzen eine Reichweite bis etwa 1,5 bis 2,5 m. Sie sind beispielsweise für die Detektion von Gegenständen im Nahbereich des toten Winkels des Fahrzeugs geeignet. Die Fernbereichssensoren arbeiten mit Radartechnik oder optisch. Die Radarsensoren haben eine Reichweite von bis zu 120 m. Als Videosensor kommt eine Kamera (einschließlich einer Nachtsichtkamera) in Betracht.

Die Auswerteeinrichtung 22 ist eingerichtet, die von den Sensoren 21 übermittelten Ausgangssignale auszuwerten. Im Fall der Videosensoren ist die Auswerteeinrichtung 22 beispielsweise als Bildverarbeitungsrechner ausgeführt. Dieser Bildverarbeitungsrechner ist in der Lage, Bildmerkmale zu extrahieren und Objekte mit ihren Eigenschaften in Bezug auf das Fahrzeug zu bestimmen. Beispielsweise kann der Abstand, die Richtung, die relative Geschwindigkeit und die Art des Objektes ermittelt werden.

Die Umfeldsensorik 20 kann Daten der identifizierten Objekte im Umfeld des Fahrzeugs an die Steuereinheit 13 übertragen. Die Steuereinheit 13 vergleicht die Daten der Objekte mit der aktuellen Fahrtrajektorie des Fahrzeugs oder einer (etwa durch einen Richtungsanzeiger angezeigten) geplanten Fahrtrajektorie. Aus diesem Vergleich ermittelt die Steuereinheit 13, ob eine Fahrspurkorrektur erforderlich ist oder nicht. Es ist aber auch möglich, dass die Umfeldsensorik 20, insbesondere die Auswerteeinrichtung 22, die aktuelle oder geplante Fahrtrajektorie von der Steuereinheit 13 übermittelt bekommt. Der Vergleich und die Entscheidung, ob Fahrkorrekturen erforderlich sind, werden in diesem Fall von der Umfeldsensorik 20 übernommen. Das Ergebnis wird der Steuereinheit 13 zur Verfügung gestellt.

Ist eine Fahrkorrektur erforderlich (z. B. wenn eine unbewusste Spurabweichung detektiert wird), entkoppelt die Steuereinheit 13 die Drehbewegung des Lenkrades 11 von der Lenkwinkeländerung der Fahrzeugräder 14. Aufgrund dieser Entkopplung wird die Regelung der Fahrzeugräder 14 mit der Sollgröße aus dem Lenkradwinkelsensor 12 unterbrochen. Die Fahrzeugräder 14 werden jetzt nicht mehr von dem Lenkrad 11 beeinflusst. Die Steuereinheit 13 generiert oder entnimmt aus einem Speicher ein Signal bzw. eine Signalfolge, mit der Lenkradantrieb 19 angesteuert wird. Diese Ansteuerung führt zu einer ruckartigen Drehbewegung des Lenkrades 11. Die Drehbewegung des Lenkrades 11 erfolgt in der der Fahrkorrektur entgegen gesetzten Richtung. Die Größe der Drehbewegung des Lenkrades 11 hängt von der Größe der erforderlichen Fahrkorrektur ab. Kann beispielsweise ein Objekt, mit dem eine Kollision droht, durch eine geringe Ausweichbewegung des Fahrzeugs umfahren werden, wird an dem Lenkrad 11 nur eine entsprechend geringe Drehbewegung aufgebracht. Taucht beispielsweise plötzlich vor dem Fahrzeug ein größeres Objekt auf, so dass eine Kollision nur mit einem starken Ausweichmanöver vermieden werden kann, wird eine entsprechend große Drehbewegung an dem Lenkrad 11 aufgebracht.

Es ist sinnvoll, auch die Geschwindigkeit, mit der eine Gefahr zunimmt, zu berücksichtigen. Beispielsweise kann im Fall einer detektierten Spurabweichung die Geschwindigkeit der Spurabweichung in der Drehbewegung des Lenkrades 11 berücksichtigt werden. Erfolgt die Spurabweichung sehr schnell, wird auf die Drehbewegung in einer kürzeren Zeit an dem Lenkrad aufgebracht, als wenn die Spurabweichung langsam erfolgt.

Unmittelbar nach der ruckartigen Drehbewegung des Lenkrades 11 wird das Lenkrad 11, immer noch im entkoppelten Zustand, wieder in die Winkelstellung zurückgestellt, in der es sich vor der Entkopplung befunden hat. Erst jetzt wird die Kopplung zwischen der Drehbewegung des Lenkrades 11 und der Lenkwinkeländerung der Fahrzeugräder 14 wieder hergestellt. Erfolgt jetzt eine Kurskorrektur durch den Fahrer, wird diese unmittelbar auf die Fahrzeugräder 14 übertragen und das Fahrzeug wieder in die Fahrspur zurückgeführt.

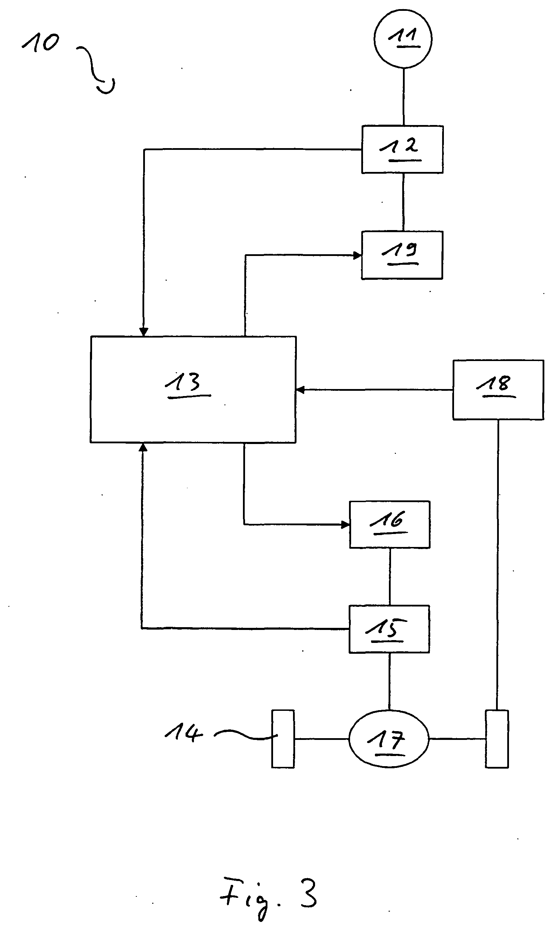

In Figur 3 ist die erfindungsgemäße Lenkung aus Figur 2 dargestellt, wobei die Umfeldsensorik in der Steuereinheit 13 integriert ist.

### Bezugszeichenliste

- 1: Verfahrensschritt (Umfeldabtastung)
- 2: keine Kurskorrekturen erforderlich
- 3: Kurskorrekturen erforderlich
- 4: Entkopplung
- 5: ruckartige Drehbewegung
- 6: Reizauslösung
- 7: Rückstellung
- 8: Wiederherstellung der Kopplung
- 9: Fahrer
- 10: Lenkung
- 11: Lenkrad
- 12: Lenkradwinkelsensor
- 13: Steuereinheit
- 14: Fahrzeugrad
- 15: Fahrzeugradwinkelsensor
- 16: Fahrzeugradantrieb
- 17: Lenkgetriebe
- 18: Fahreigenschaftssensor
- 19: Lenkradantrieb
- 20: Umfeldsensorik
- 21: Sensoren
- 22: Auswerteeinrichtung

## Patentansprüche

1. Fahrerassistenzsystem für ein Fahrzeug mit einer Kopplung zwischen einem Lenkrad (11) und wenigstens einem gelenkten Fahrzeugrad (14), durch die eine an dem Lenkrad (11) aufgebrachte Drehbewegung in eine Lenkwinkeländerung des wenigstens einen Fahrzeugrades (14) umgesetzt wird, mit einer Umfeldsensorik (20) zum Ermitteln von Objekten im Umfeld des Fahrzeugs, und mit einer Steuereinheit (13), die eingerichtet ist, in Abhängigkeit von Ausgangssignalen der Umfeldsensorik (20) an dem Lenkrad (11) eine Drehbewegung aufzubringen und das Lenkrad (11) in seine Winkelstellung vor der Drehbewegung zurückzustellen, **dadurch gekennzeichnet, dass** die Steuereinheit (13) eingerichtet ist, die Kopplung zwischen dem Lenkrad (11) und dem wenigstens einen Fahrzeugrad (14) aufzuheben, bevor die Drehbewegung an dem Lenkrad (11) aufgebracht wird, und dass die Steuereinheit (13) eingerichtet ist, die Kopplung zwischen dem Lenkrad (11) und dem wenigstens einen Fahrzeugrad (14) wiederherzustellen, nachdem das Lenkrad (11) in seine Winkelstellung vor der Drehbewegung zurückgestellt worden ist.

2. Fahrerassistenzsystem nach einem der vorstehenden Ansprüche, **dadurch gekennzeichnet, dass** die Entkopplung, das Aufbringen der Drehbewegung an dem Lenkrad (11), die Rückstellung der Winkelstellung des Lenkrades (11) und die Wiederherstellung der Kopplung an die Auslösezeit für reflexbedingte Handlungen von Menschen angepasst ist.

3. Fahrerassistenzsystem nach einem der vorstehenden Ansprüche, **dadurch gekennzeichnet, dass** die Größe der an dem Lenkrad (11) aufgebrachten Drehbewegung abhängig ist von der Größe einer Lenkradbewegung, die erforderlich ist, um einer durch die Umfeldsensorik (20) detektierten Gefährdung entgegenzuwirken.

4. Fahrerassistenzsystem nach einem der vorstehenden Ansprüche, **dadurch gekennzeichnet, dass** die Umfeldsensorik (20) einen Ultraschallsensor, Radarsensor und/oder Videosensor umfasst.

5. Fahrerassistenzsystem nach einem der vorstehenden Ansprüche, **dadurch gekennzeichnet, dass** die Umfeldsensorik (20) mehrere Sensoren (21) umfasst, deren Signale kombiniert und ausgewertet werden.

6. Fahrerassistenzsystem nach einem der vorstehenden Ansprüche, dadurch gekennzeichet, **dass** es als Fahrspurassistent, Überholassistent, Ein- und Ausfädelassistent, Ausweichassistent und/oder Umfahrassistent ausgebildet ist.

7. Lenkung für ein Fahrzeug mit einem Lenkrad (11) und wenigstens einem gelenkten Fahrzeugrad (14), einem Lenkradwinkelsensor (12) zum Bestimmen einer Winkelstellung des Lenkrades (11), einem Lenkradantrieb (19) zum Aufbringen einer Drehbewegung an dem Lenkrad (11), **gekennzeichnet durch** ein Fahrerassistenzsystemen nach einem der Ansprüche 1 bis 6.

8. Verfahren zum Unterstützen des Fahrers eines Fahrzeugs mit folgenden Schritten:
a) Ermitteln eines Objektes im Umfeld des Fahrzeugs, das eine Gefährdung für das Fahrzeug darstellt;
b) Aufbringen einer Drehbewegung an dem Lenkrad (11), wobei die Drehbewegung in diejenige Richtung erfolgt, die der Richtung eines Ausweichmanövers entgegengesetzt ist;
c) Rückstellen des Lenkrads (11) in seine Winkelstellung vor der aufgebrachten Drehbewegung,
**dadurch gekennzeichnet, dass** das Lenkrad (11) vor dem Aufbringen der Drehbewegung an dem Lenkrad (11) von dem wenigstens einen gelenkten Fahrzeugrad (14) entkoppelt wird, und dass das Lenkrad (11) nach dem Rückstellen des Lenkrads (11) mit dem wenigstens einen gelenkten Fahrzeugrad (14) wieder gekoppelt wird.

## Claims

1. Driver assistance system for a vehicle with a coupling between a steering wheel (11) and at least one steered vehicle wheel (14), by means of which a rotational movement which is applied to the steering wheel (11) is converted into a change in the steering angle of the at least one vehicle wheel (14), having a surroundings sensor system (20), for determining objects in the surroundings of the vehicle, and having a control unit (13) which is configured to apply a rotational movement to the steering wheel (11) as a function of output signals of the surrounding sensor system (20), and to reset the steering wheel (11) into its angular position before the rotational movement, **characterized in that** the control unit (13) is configured to cancel the coupling between the steering wheel (11) and the at least one vehicle wheel (14) before the rotational movement is applied to the steering wheel (11), and **in that** the control unit (13) is configured to restore the coupling between the steering wheel (11) and the at least one vehicle wheel (14) after the steering wheel (11) has been reset to its angular position before the rotational movement.

2. Driver assistance system according to one of the preceding claims, **characterized in that** the decoupling, the application of the rotational movement to the steering wheel (11), the resetting of the angular position of the steering wheel (11) and the restoration of the coupling are adapted to the triggering time for reflex-conditioned actions by humans.

3. Driver assistance system according to one of the preceding claims, **characterized in that** the magnitude of the rotational movement which is applied to the steering wheel (11) is dependent on the magnitude of a steering wheel movement which is necessary to counteract a hazard detected by the surroundings sensor system (20).

4. Driver assistance system according to one of the preceding claims, **characterized in that** the surroundings sensor system (20) comprises an ultrasonic sensor, radar sensor and/or video sensor.

5. Driver assistance system according to one of the preceding claims, **characterized in that** the surroundings sensor system (20) comprises a plurality of sensors (21) whose signals are combined and evaluated.

6. Driver assistance system according to one of the preceding claims, **characterized in that** said system is embodied as a lane keeping assistant, overtaking assistant, an assistant for moving in and out of a lane, an avoidance assistant and/or bypass assistant.

7. Steering for a vehicle having a steering wheel (11) and at least one steered vehicle wheel (14), a steering wheel sensor (12) for determining an angular position of the steering wheel (11), a steering wheel drive (19) for applying a rotational movement to the steering wheel (11), **characterized by** a driver assistance system according to one of Claims 1 to 6.

8. Method for assisting the driver of a vehicle, having the following steps:
a) determining an object in the surroundings of the vehicle which represents a hazard to the vehicle;
b) applying a rotational movement to the vehicle (11), wherein the rotational movement takes place in the direction which is opposed to the direction of an avoidance manoeuvre; and
c) resetting the steering wheel (11) into its angular position before the applied rotational movement,
**characterized in that** before the rotational movement is applied to the steering wheel (11), the steering wheel (11) is decoupled from the at least one steered vehicle wheel (14), and **in that** after the resetting of the steering wheel (11) the steering wheel (11) is re-coupled to the at least one steered vehicle wheel (14).

## Revendications

1. Système d'assistance à la conduite pour un véhicule équipé d'un accouplement entre un volant de direction (11) et au moins une roue de véhicule (14) articulée, par le biais duquel un mouvement de rotation appliqué au volant de direction (11) est converti en un changement d'angle de braquage de l'au moins une roue de véhicule (14), avec un système de capteurs d'environnement (20) servant à détecter des objets dans l'environnement du véhicule et avec une unité de commande (13) conçue pour appliquer un mouvement de rotation au volant de direction (11) en fonction de signaux de sortie du système de capteurs d'environnement (20) et pour ramener le volant de direction (11) dans sa position angulaire occupée avant le mouvement de rotation, **caractérisé en ce que** l'unité de commande (13) est conçue pour débloquer l'accouplement entre le volant de direction (11) et l'au moins une roue de véhicule (14) avant d'appliquer le mouvement de rotation au volant de direction (11) et **en ce que** l'unité de commande (13) est conçue pour rétablir l'accouplement entre le volant de direction (11) et l'au moins une roue de véhicule (14) une fois le volant de direction (11) ramené dans sa position angulaire occupée avant le mouvement de rotation.

2. Système d'assistance à la conduite selon l'une quelconque des revendications précédentes, **caractérisé en ce que** le découplage, l'application du mouvement de rotation au volant de direction (11), le retour à la position angulaire du volant de direction (11) et le rétablissement de l'accouplement sont adaptés au temps de déclenchement des actions humaines conditionnées par réflexes.

3. Système d'assistance à la conduite selon l'une quelconque des revendications précédentes, **caractérisé en ce que** l'ampleur du mouvement de rotation appliqué au volant de direction (11) dépend de l'ampleur d'un mouvement du volant de direction nécessaire pour contrer un danger détecté par le système de capteurs d'environnement (20).

4. Système d'assistance à la conduite selon l'une quelconque des revendications précédentes, **caractérisé en ce que** le système de capteurs d'environnement (20) comprend un capteur à ultrasons, un capteur radar et/ou un capteur vidéo.

5. Système d'assistance à la conduite selon l'une quelconque des revendications précédentes, **caractérisé en ce que** le système de capteurs d'environnement (20) comprend plusieurs capteurs (21) dont les signaux sont combinés et analysés.

6. Système d'assistance à la conduite selon l'une quelconque des revendications précédentes, **caractérisé en ce qu'**il prend la forme d'un assistant de voie de circulation, d'un assistant de dépassement, d'un assistant d'intégration et déboîtage par rapport à une file, d'un assistant d'évitement et/ou d'un assistant de doublement.

7. Direction pour un véhicule équipé d'un volant de direction (11) et d'au moins une roue de véhicule (14) articulée, d'un capteur d'angle de volant de direction (12) permettant de déterminer une position angulaire du volant de direction (11), d'un entraînement de volant de direction (19) permettant d'appliquer un mouvement de rotation au volant de direction (11), **caractérisée par** la présence d'un système d'assistance à la conduite selon l'une quelconque des revendications 1 à 6.

8. Procédé d'aide au conducteur d'un véhicule avec les étapes suivantes :
a) détection d'un objet représentant un danger pour le véhicule dans l'environnement du véhicule ;
b) application d'un mouvement de rotation au volant de direction (11), le mouvement de rotation se produisant dans la direction opposée à la direction d'une manoeuvre d'évitement ;
c) retour du volant de direction (11) dans sa position angulaire occupée avant l'application du mouvement de rotation ;
**caractérisé en ce que** le volant de direction (11) est découplé de l'au moins une roue de véhicule (14) articulée avant l'application du mouvement de rotation au volant de direction (11) et **en ce que** le volant de direction (11) est recouplé à l'au moins une roue de véhicule (14) articulée après le retour du volant de direction (11).
